# EUROPEAN PATENT APPLICATION

(11) **EP 2 248 568 A1**
(43) Date of publication of application: **10.11.2010**
(21) Application number: 09075215.5
(22) Date of filing: 04.05.2009
(51) Int. Cl.: B01D 3/06, B01D 3/10, C02F 1/04, C02F 1/06, B01D 1/26

(54) **Barometric vacuum system for multi stage distillation of liquids**

(71) Applicant: Ebejer, Edwin, St. Julians STJ1814 (MT)
(72) Inventor: Ebejer, Edwin, St. Julians STJ1814 (MT)

(57) **Abstract**

This system produces a progressively lower vacuum by barometric means in multi stage distillation or desalination processes (which produce distillate in two or more stages, such as multi stage flash), with the highest vacuum (lowest vapour pressure) in the last stage and the lowest (highest vapour pressure) in the first stage. Product to be distilled (such as sea or brackish water) is pumped through the condensers (absorbing the latent heat of condensation in the process), then heated and passed through the flashing tanks of each stage where evaporation by flashing takes place. Each stage has a product (such as fresh water) holding tank where the distillate is held and the amount of vacuum in each stage is regulated by the level of the distillate in the product holding tank of that particular stage.

## Description

This invention uses barometric vacuum in multi staged distillation or desalination systems, and is ideal for systems which produce distillate in each, or in most of their stages (such as Multi Stage Flash). The barometric vacuum replaces the steam ejectors or mechanical vacuum pumps presently used to create the vacuum in such distillation systems. This description is of a 4 stage distillation plant, however it can be applied for distillation systems with any number of stages. This invention can be used for the distillation of any distillable product, however since the world's main concern at the moment is the scarcity of potable water, this description will be dealing with the distillation of water.

The object of this invention is to create a progressively lower vapour pressure (progressively higher vacuum) in the stages of a multi stage distillation system by barometric means, instead of by steam ejectors or mechanical vacuum pumps which is the state of the art of present day multi stage distillers.

This description illustrates a particular application which is an exemplary embodiment. This invention can also be used in other embodiments of multi stage distillers that produce distillate in two or more of their stages.

### Start up and operation

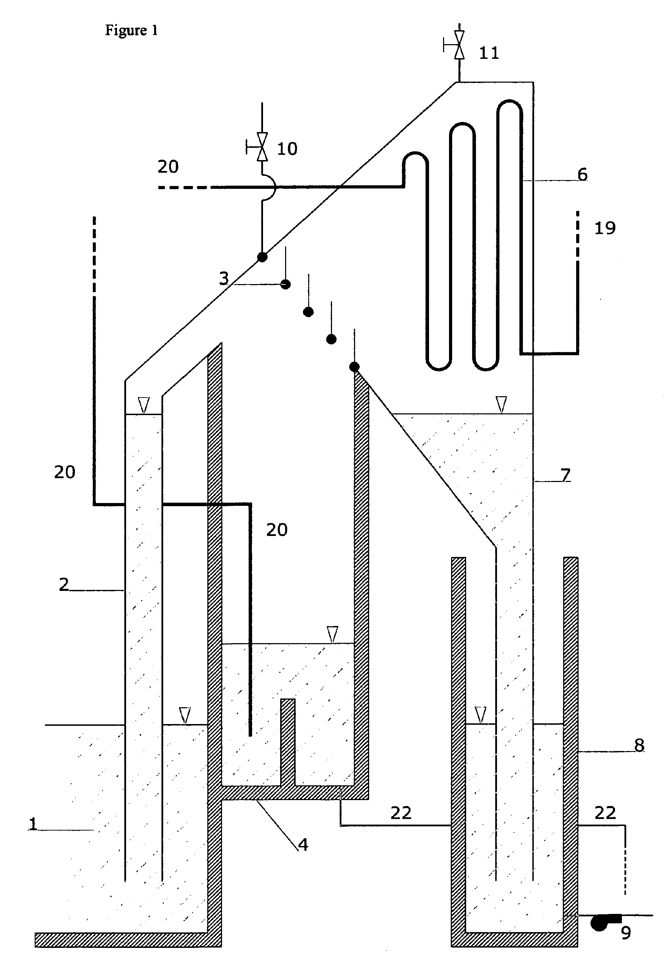

Figure 1 is a drawing of any stage (other than the last). Item no. 1 is the water which is to be distilled, this can be any stretch of water such as a lake, a brackish water source or even the open sea.

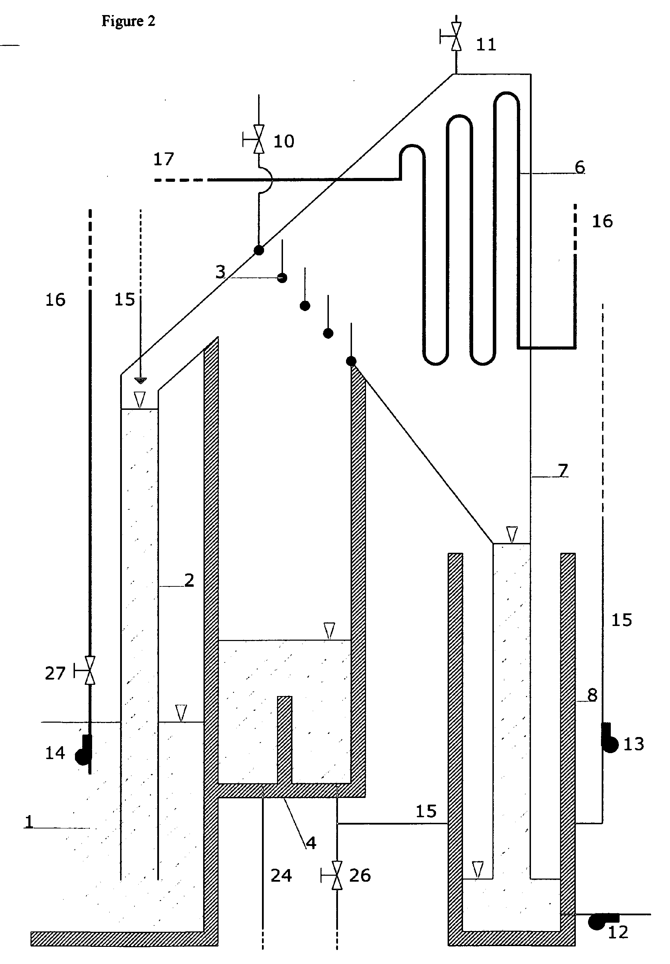

Figure 2 is a drawing of the very last stage (in this case Stage 4.), and Figure 3. is a schematic drawing of a four stage plant.
Figures 4 and 5 are two ways of how to transport the distilled water away from the plant.

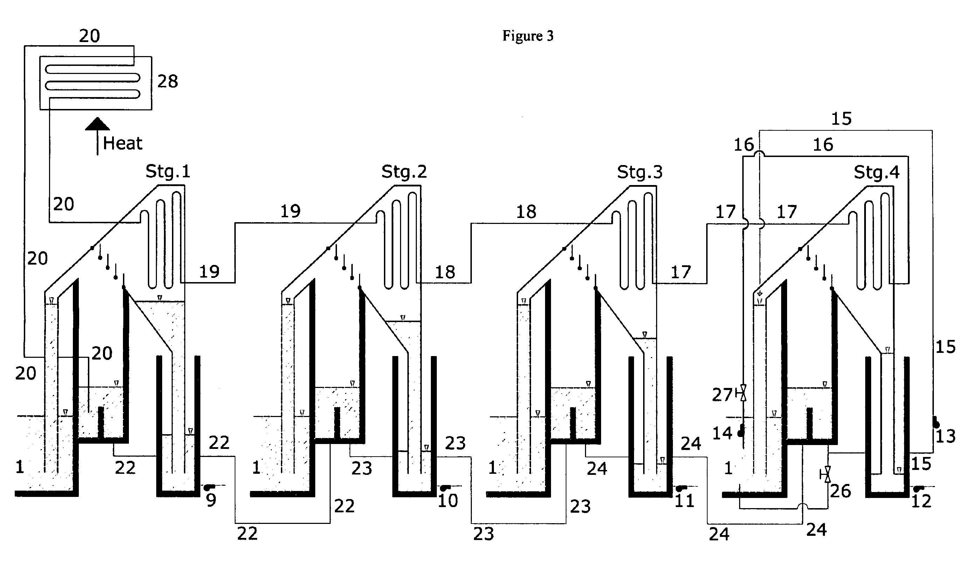

The system is started (see Figure 3.) as follows;

With valve (27) open, pump (14) is started to fill the whole line made up of (16), (17), (18), (19) and (20) up to tank (4) of Stage 1, with water to be distilled (sea, lake, brackish etc.,). Barometric legs (2) and (7) of all four stages are closed at the bottom by some means (large valves or otherwise). Louvers (3) of all stages are in the closed position, pump (14) switched off and valves (26) and (27) are closed. After pouring some fresh water in tanks (8) of all the stages to a depth higher than the bottom of the barometric leg (7) so that the bottom of all the barometric legs (7) of all the stages are immersed in fresh water. Fresh water is poured through valves (11) and water to be distilled (brackish, lake, river, sea etc.,) is poured through valves (10), and the system is completely filled with water. The left of each stage, that is, tank (4) and barometric leg (2) is filled with water to be distilled, whilst the right side (condenser space and barometric leg 7) with fresh water, making sure that all the air is evacuated with the help of pump (13). The filling should be conducted in a way that both levels rise together at the same rate, with the fresh water side at a slightly higher level then the water to be distilled side so that when the two levels reach louvers (3), there will be a small weight of water pushing on the louvers in the as closed position.
When the system is completely full, valves (10) and (11) are closed and the bottom of all the barometric legs (2) and (7) of all the stages are opened together with valves (26) and (27). All the levels in all the stages will fall until a barometric balance is reached and a barometric vacuum is now present at the top of all the stages. Louvers (3) of all stages are now opened and valve (26) is now closed. With the vapour pressure (degree of vacuum) at the top of the stages the same for all the stages, Pump (13) is started so as to lower the level of water in tanks (4) of all the stages to the desired operating level. Pumps (9), (10), (11) and (12) are started and individually switched off when the levels of fresh water in tanks (8) are stepped as shown in Figures 3, 4 and 5, with the highest level in stage 1 (say, the same level as that of Item1) and the lowest in the last stage.

This difference in levels in tanks (8) creates different partial vacuums in the top part of the stages, with the lowest being in the first stage and going progressively higher, with the highest in the last stage.

Pump (13) and (14) are restarted and heat is supplied to heat exchanger (28).The heat used should preferably be a Green source of heat, such as Solar Energy, energy extracted from the exhaust gases of gas turbines, biomass, condensers of steam power plants or a combination of two of the above.

The water vapour flashed in tanks (4) of all the stages are condensed by the condensers (6) of all the stages and the distilled water produced is collected in barometric legs (7) and tanks (8) of the stages.

The water to be distilled (brackish, lake, river, sea etc.,) is therefore pumped by means of pump (14) through the condensers (6) of all the stages, where it absorbs the latent heat of condensation from the condensation process in each stage. It is then heated in heat exchanger (28) and then passes progressively through tanks (4) of all the stages where some of it evaporates by flashing due to the progressively lower vapour pressure encountered in the stages.
Pump (13) then pumps the brine from tank (4) of the last stage to the top of barometric leg (2) of the last stage (where the lowest vapour pressure of all the plant is located) and the brine is evacuated from the plant via barometric leg (2) of the last stage (in this case Stage 4.) to the lake, river, sea etc., (1).

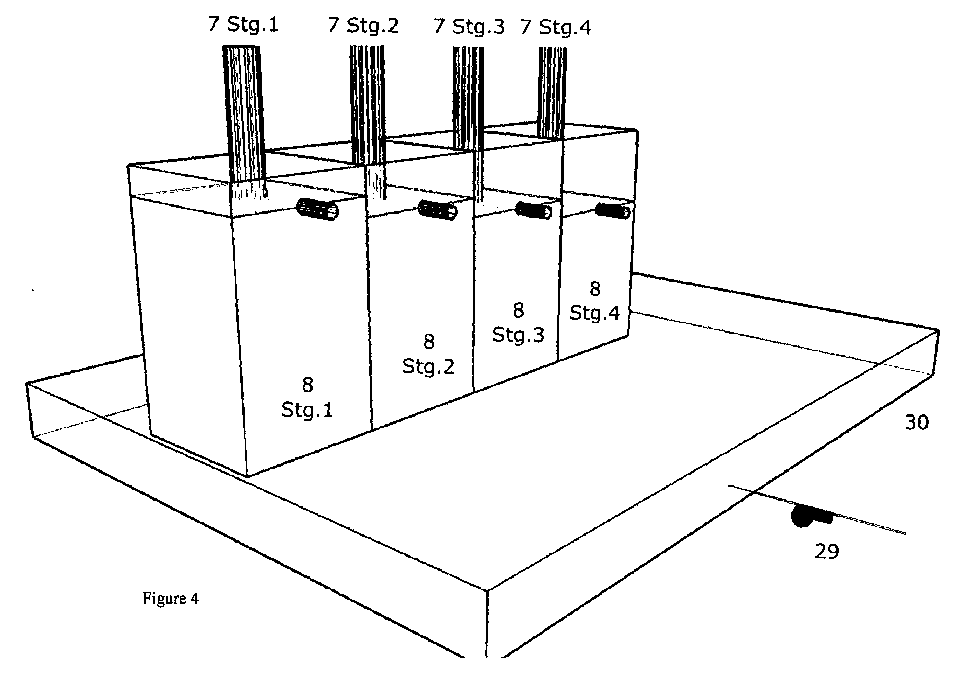

The next step is to transport the distillate away, and one method of how this can be done is as seen in Figure 4, where all the tanks (8) of all the stages are located inside a holding tank (30) and each tank (8) has a short overflow pipe located at the desired level (to have a progressively stepped degree of vacuum in the stages). The fresh water produced in the stages will overflow into the holding tank (30) and the water produced by all four stages is then pumped away from the plant by pump (29).

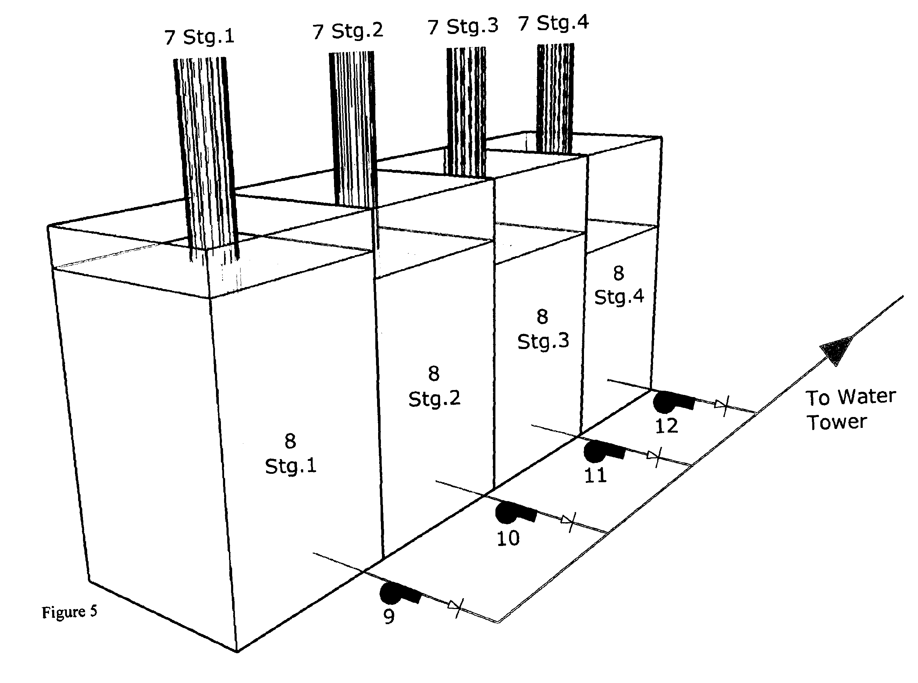

A second method is as shown in Figure 5, where pumps (9), (10), (11) and (12) are each activated by a level switch located in their respective tank (8), and these level switches will start their respective pumps to transport distilled water away from that stage when the level of tank (8) of that particular stage rises above the level preset at start up. This will ensure that the required partial vacuum at the top of that stage is maintained. This will also ensure that the whole system remains balanced with a progressively increasing partial vacuum (decreasing vapour pressure) from stage 1 to the last stage.

As seen in Figure 5 the pumps (9), (10), (11) and (12) are connected via a non return valve, to a line which transports the fresh water to the top of a water tower so that the water produced is transported away from the plant.

All water producing plants of whatever nature require energy to pump the water produced away from the plant. In this case the same energy used to pump the water away, is also contributing directly to the maintenance of the required partial vacuums in the plant.

A second embodiment of the invention is to have a progressive increase in the condensers' capacity of the stages, to obtain a progressively lower vapour pressure (progressively higher vacuum) in the stages of multi stage distillers, in a way that keeps the levels of all the distillate tanks (8) the same (not stepped). In this way, one big tank (8) can be used to hold all the barometric legs (7) of all the stages.

Notes:
In the case of water that has non condensable gasses dissolved in it, such as the sea or lake water, then a small vacuum pump must be placed at the very top of the condenser of each stage where these non condensable gasses will accumulate and this pump is switched on periodically to evacuate these gasses.

At start up when the system is being filled, the louvers (3) might not make a hundred per cent barrier between the two types of waters and a small amount of mixing might occur between the two waters. In some cases this can be acceptable as this occurs only at start up and therefore the ensuing small amount of mixing will represent a very tiny percentage of the overall production. If the distillation process in question requires that absolutely no mixing is allowed between product to be distilled and the distillate, then louvers (3) can be replaced with more sophisticated systems or with for example glass that shatters to very small pieces. At the appropriate moment, that is after the barometric vacuum has been formed, the glass can be struck by a solenoid operated hammer and the glass will be shattered into small pieces which fall down to rest at the bottom of tanks (4) where they will not obstruct the operation of the distillation process.

In the case where instead of a stretch of water, (1) is a tank of water to be distilled, then in this case we require two tanks to represent item (1), the first is with water to be distilled where pump (14) is located and the second where the barometric leg (2) of the very last stage is located, so that the water to be distilled and the resultant brine do not mix.

All parts of the invention where heat loss can occur have to be properly insulated to avoid unnecessary heat loss.

## Claims

1. A barometric vacuum system to create a progressively lower vapour pressure (progressively higher vacuum) in the stages of multi stage distillation or desalination processes that produce distillate in two or more of their stages. This progression of degree of vacuum in the stages is obtained by progressively stepping up the levels of the distillate tanks (8) (from the last stage to the first) with the consequential stepping up of levels of the distillate in the barometric legs (7) as shown in Figures 3, 4 and 5.

2. A barometric vacuum system, with a progressively lower vapour pressure (progressively higher vacuum) in the stages of multi stage distillation or desalination processes that produce distillate in two or more of their stages, (as in Claim 1.) but with the levels in the distillate tanks (8) not stepped but the same for all the stages (or, one bigger tank (8) is used that holds all the barometric legs (7) of all the stages), with the progressive increase of the degree of vacuum in the stages being attained by increasing progressively the condensers' capacity of the stages.
